# EUROPEAN PATENT APPLICATION

(11) **EP 2 206 730 A1**
(43) Date of publication of application: **14.07.2010**
(21) Application number: 08845194.3
(22) Date of filing: 03.10.2008
(51) Int. Cl.: C08C 19/22, B60C 1/00, C08L 15/00

(54) **MODIFIED NATURAL RUBBER, PROCESS FOR PRODUCTION OF THE SAME, AND RUBBER COMPOSITION AND TIRE EACH COMPRISING THE SAME**

(30) Priority: 30.10.2007 JP 2007282316
(71) Applicant: Bridgestone Corporation, Tokyo 104-8340 (JP)
(72) Inventor: YONEMOTO, Makiko, Kodaira-shi Tokyo 187-8531 (JP)
(74) Representative: Whalley, Kevin
(86) International application number: PCT/JP2008/068023
(87) International publication number: WO 2009/057418

(57) **Abstract**

This invention provides a modified natural rubber producible at a lower cost than the conventional techniques and capable of improving the low loss factor, wear resistance and fracture characteristics of the rubber composition using the modified natural rubber as the rubber component in the rubber composition, and a method for producing the modified natural rubber. This invention provides a modified natural rubber formed by adding a hydrazide compound having a polar group to at least one natural rubber raw material selected from the group consisting of a natural rubber, a coagulated natural rubber latex and a natural rubber cup lump, a rubber composition using the modified natural rubber, and a tire using the rubber composition in any tire member.

## Description

### TECHNICAL FIELD

The present invention relates to a modified natural rubber and a method for producing the same, and a rubber composition and a tire using the modified natural rubber, and more particularly to a rubber composition producible at a lower cost than conventional techniques and being excellent in the low loss factor, wear resistance and fracture resistance.

### BACKGROUND ART

Lately, it is strongly demanded to reduce a fuel consumption of an automobile, and hence a tire having a low rolling resistance is required. For this end, there is required a rubber composition having a low tanδ (hereinafter referred to as a low loss factor) and being excellent in the low heat buildup as a rubber composition used in a tread or the like of the tire. Also, the rubber composition for the tread is required to be excellent in the wear resistance and fracture characteristics in addition to the low loss factor. In order to improve the low loss factor, wear resistance and fracture characteristics of the rubber composition, it is effective to improve an affinity between a filler such as carbon black, silica or the like and a rubber component in the rubber composition.

For example, in order to improve the reinforcing effect with the filler by improving the affinity between the filler and the rubber component in the rubber composition, there are developed a synthetic rubber wherein the affinity for the filler is improved by a terminal modification, a synthetic rubber wherein the affinity for the filler is improved by copolymerizing with a monomer having a functional group and so on.

On the other hand, concerning a natural rubber, for example, there is known a technique wherein a graft polymerization is conducted by adding a vinyl-based monomer to a natural rubber latex (see JP-A-H05-287121, JP-AH06-329702, JP-A-H09-25468, JP-A-2000-319339, JP-A-2002-138266, JP-A-2002-348559). The grafted natural rubber obtained by this technique is put into a practical use as an adhesive or the like. Also, WO2004/106397 discloses a technique wherein a modified natural rubber formed by adding a monomer having a polar group to the natural rubber latex, graft-polymerizing the monomer having the polar group with a natural rubber molecule in the natural rubber latex, and then coagulating and drying the modified natural rubber latex, is used as the rubber component to improve the affinity between the rubber component and the filler, thereby improving the reinforcement of the rubber composition, and then improving the low loss factor, wear resistance, and fracture characteristics of the rubber composition.

### DISCLOSURE OF THE INVENTION

### PROBLEMS TO BE SOLVED BY THE INVENTION

In the above-mentioned method wherein the monomer having the polar group is added to the natural rubber latex and graft-polymerized, it is necessary to use a high-purity latex in order to achieve high graft efficiency, so that it is necessary to conduct a concentration process of the latex such as centrifugal separation or the like additionally, as well as it is necessary to conduct a modification reaction, therefore production cost is high.

It is, therefore, an object of the invention to provide a modified natural rubber producible at a lower cost than the conventional techniques and capable of improving the low loss factor, wear resistance and fracture characteristics of the rubber composition using the modified natural rubber as the rubber component in the rubber composition, and a method for producing the modified natural rubber. It is another object of the invention to provide a rubber composition using the above modified natural rubber and a tire using the same.

### MEANS OF SOLVING THE PROBLEMS

The inventor has made various studies in order to achieve the above objects and discovered that by charging a hydrazide compound having a polar group into a solid natural rubber raw material available at a low cost and directly reacting them, the polar group can be introduced easily into the main chain of a natural rubber molecule in the natural rubber raw material, and as a result the invention has been accomplished.

That is, the modified natural rubber according to the invention is formed by charging a hydrazide compound having a polar group into at least one natural rubber raw material selected from the group consisting of a natural rubber, a coagulated natural rubber latex and a natural rubber cup lump and adding the hydrazide compound having the polar group to a natural rubber molecule in the natural rubber raw material.

In a preferable embodiment of the modified natural rubber according to the invention, an amount of the hydrazide compound having the polar group added is 0.01-5.0% by mass based on a solid rubber component in the natural rubber raw material.

In another preferable embodiment of the modified natural rubber according to the invention, the polar group of the hydrazide compound having the polar group is at least one selected from the group consisting of amino group, imino group, nitrile group, ammonium group, imide group, amide group, hydrazo group, azo group, diazo group, hydroxyl group, carboxyl group, carbonyl group, epoxy group, oxycarbonyl group, nitrogen-containing heterocyclic group, oxygen-containing heterocyclic group, tin-containing group and alkoxysilyl group.

Also, the method for producing the modified natural rubber according to the invention is characterized by comprising the step of charging a hydrazide compound having a polar group into at least one natural rubber raw material selected from the group consisting of a natural rubber, a coagulated natural rubber latex and a natural rubber cup lump and adding the hydrazide compound having the polar group to a natural rubber molecule in the natural rubber raw material.

In a preferable embodiment of the method for producing the modified natural rubber according to the invention, the step of charging the hydrazide compound having the polar group is conducted by a mixer, an extruder or a kneader.

Moreover, the rubber composition according to the invention is characterized by using the modified natural rubber, and the tire according to the invention is characterized by using the rubber composition in any tire member.

### EFFECTS OF THE INVENTION

According to the invention, there is an advantageous effect of being able to provide a modified natural rubber producible at a lower cost than the conventional techniques and capable of improving the low loss factor, wear resistance and fracture characteristics of the rubber composition using the modified natural rubber as the rubber component in the rubber composition, and to provide a method for producing the modified natural rubber. Also, there is an advantageous effect of being able to provide a rubber composition using the modified natural rubber and being excellent in the low loss factor, wear resistance and fracture characteristics as well as a tire using the rubber composition.

### BEST MODE FOR CARRYING OUT THE INVENTION

The invention will be described in detail bellow. The modified natural rubber according to the invention is formed by charging a hydrazide compound having a polar group into at least one natural rubber raw material selected from the group consisting of a natural rubber, a coagulated natural rubber latex and a natural rubber cup lump and adding the hydrazide compound having the polar group to a natural rubber molecule in the natural rubber raw material. Since the polar group of the hydrazide compound having the polar group is excellent in the affinity for various fillers such as carbon black, silica and the like, the modified natural rubber is high in the affinity for the various fillers as compared with the unmodified natural rubber. Therefore, in the rubber composition of the invention using the modified natural rubber as a rubber component, the dispersibility of the filler into the rubber component is high and the reinforcing effect of the filler is sufficiently developed to make the fracture characteristics and the wear resistance excellent and highly improve the low heat buildup (low loss factor). Also, the fracture resistance and wear resistance can be significantly improved while highly decreasing the rolling resistance by using the rubber composition in a tire, particularly a tread of the tire.

As the raw material of the modified natural rubber of the invention, a various dry solid natural rubber, a various coagulated natural rubber latex (including an unsmoked sheet) or a natural rubber cup lump may be used, and these natural rubber raw materials may be used alone or in a combination of two or more. Since there is no need to use a high-purity natural rubber in producing the modified natural rubber of the invention, the modified natural rubber of the invention can be produced at a relatively low cost. Also, since among the natural rubber raw materials, the cup rump or the like is available at a low price, the merit in the cost is larger. If the cup lump or the like is used as the raw material, the modification efficiency of the natural rubber may decrease somewhat, but in consideration of both the cost and the modification efficiency, the merit outweighs the demerit.

Moreover, the hydrazide compound having the polar group has high reactivity. Therefore, by simply charging the hydrazide compound having the polar group into the natural rubber raw material, the hydrazide compound reacts with aldehyde group in the natural rubber in the natural rubber raw material, and as a result, the polar group can be easily introduced into the main chain of the natural rubber.

The hydrazide compound having the polar group is not particularly limited as long as it is a hydrazide compound having at least one polar group in its molecule. As a concrete example are preferably mentioned amino group, imino group, nitrile group, ammonium group, imide group, amide group, hydrazo group, azo group, diazo group, hydroxyl group, carboxyl group, carbonyl group, epoxy group, oxycarbonyl group, nitrogen-containing heterocyclic group, oxygen-containing heterocyclic group, tin-containing group, alkoxysilyl group and so on. These hydrazide compounds having the polar group may be used alone or in a combination of two or more.

As the hydrazide compound having amino group are mentioned hydrazide compounds having in the molecule at least one amino group selected from primary, secondary and tertiary amino groups. These hydrazide compounds having amino group may be used alone or in a combination of two or more.

As the hydrazide compound having primary amino group are mentioned, for example, 2-aminoacetohydrazide, 3-aminopropanehydrazide, 4-aminobutanehydrazide, 2-aminobenzohydrazide, 4-aminobenzohydrazide and so on.

As the hydrazide compound having secondary amino group are mentioned, for example, 2-(methylamino)acetohydrazide, 2-(ethylamino)acetohydrazide, 3-(methylamino)propanehydrazide, 3-(ethylamino)propanehydrazide, 3-(propylamino)propanehydrazide, 3-(isopropylamino)propanehydrazide, 4-(methylamino)butanehydrazide, 4-(ethylamino)butanehydrazide, 4-(propylamino)butanehydrazide, 4-(isopropylamino)butanehydrazide, 2-(methylamino)benzohydrazide, 2-(ethylamino)benzohydrazide, 2-(propylamino)benzohydrazide, 2-(isopropylamino)benzohydrazide, 4-(methylamino)benzohydrazide, 4-(ethylamino)benzohydrazide, 4-(propylamino)benzohydrazide, 4-(isopropylamino)benzohydrazide and so on.

As the hydrazide compound having tertiary amino group are mentioned, for example, N, N-disubstituted aminoalkylhydrazide compound, N, N-disubstituted benzohydrazide compound and so on. As these compounds are mentioned, for example, 2-(dimethylamino)acetohydrazide, 2-(diethylamino)acetohydrazide, 3-(dimethylamino)propanehydrazide, 3-(diethylamino)propanehydrazide, 3-(dipropylamino)propanehydrazide, 3-(diisopropylamino)propanehydrazide, 4-(dimethylamino)butanehydrazide, 4-(diethylamino)butanehydrazide, 4-(dipropylamino)butanehydrazide, 4-(diisopropylamino)butanehydrazide, 2-(dimethylamino)benzohydrazide, 2-(diethylamino)benzohydrazide, 2-(dipropylamino)benzohydrazide, 2-(diisopropylamino)benzohydrazide, 4-(dimethylamino)benzohydrazide, 4-(diethylamino)benzohydrazide, 4-(dipropylamino)benzohydrazide, 4-(diisopropylamino)benzohydrazide and so on.

Also, the nitrogen-containing heterocyclic group can be used instead of the amino group, and as the nitrogen-containing heterocyclic group are mentioned, for example, pyrrole, histidine, imidazole, triazolidine, triazole, triazine, pyridine, pyrimidine, pyrazine, indole, quinoline, purine, phenazine, pteridine, melamine and so on. Furthermore, the nitrogen-containing heterocyclic ring may include another heteroatoms in its ring. A hydrazide compound having pyridyl group as the nitrogen-containing heterocyclic group includes, for example, isonicotinohydrazide, picolinohydrazide and so on. These hydrazide compounds having nitrogen-containing heterocyclic group may be used alone or in a combination of two or more.

As the hydrazide compound having nitrile group are mentioned 2-nitroacetohydrazide, 3-nitropropanehydrazide, 4-nitrobutanehydrazide, 2-nitrobenzohydrazide, 4-nitrobenzohydrazide and so on. These hydrazide compounds having nitrile group may be used alone or in a combination of two or more.

As the hydrazide compound having hydroxyl group are mentioned hydrazide compounds having in the molecule at lease one hydroxyl group selected from primary, secondary or tertiary hydroxyl group. As the hydrazide compound having hydroxyl group are mentioned, for example, 2-hydroxyacetohydrazide, 3-hydroxypropanehydrazide, 4-hydroxybutanehydrazide, 2-hydroxybenzohydrazide, 4-hydroxybenzohydrazide and so on. These hydrazide compounds having hydroxyl group may be used alone or in a combination of two or more.

As the hydrazide compound having carboxyl group are mentioned 3-carboxypropanehydrazide, 4-carboxybutanehydrazide, 2-benzoic acid hydrazide, 4-benzoic acid hydrazide and so on. These hydrazide compounds having carboxyl group may be used alone or in a combination of two or more.

As the hydrazide compound having epoxy group are mentioned 2-(oxiran-2-yl)acetohydrazide, 3-(oxiran-2-yl)propane hydrazide, 3-(tetrahydro-2H-pyran-4-yl)propanehydrazide and so on. These hydrazide compounds having epoxy group may be used alone or in a combination of two or more.

As the hydrazide compound having the tin-containing group are mentioned tin-containing hydrazide compounds such as 3-(tributyltin)propanehydrazide, 3-(trimethyltin)propanehydrazide, 3-(triphenyltin)propanehydrazide, 3-(trioctyltin)propanehydrazide, 4-(tributyltin)butanehydrazide, 4-(trimethyltin)butanehydrazide, 4-(triphenyltin)butanehydrazide, 4-(trioctyltin)butanehydrazide, 2-(tributyltin)benzohydrazide, 4-(tributyltin)benzohydrazide, 2-(trimethyltin)benzohydrazide, 4-(trimethyltin)benzohydrazide, 2-(trioctyltin)benzohydrazide, 4-(trioctyltin)benzohydrazide and so on. These tin-containing hydrazide compounds may be used alone or in a combination of two or more.

As the hydrazide compound having alkoxysilyl group are mentioned 2-(trimethoxysilyl)acetohydrazide, 2-(triethoxysilyl)acetohydrazide, 3-(trimethoxysilyl)propanehydrazide, 3-(triethoxysilyl)propanehydrazide, 4-(trimethoxysilyl)butanehydrazide, 4-(triethoxysilyl)butanehydrazide, 2-(trimethoxysilyl)benzohydrazide, 2-(triethoxysilyl)benzohydrazide, 4-(trimethoxysilyl)benzohydrazide, 4-(triethoxysilyl)benzohydrazide and so on. These hydrazide compounds having alkoxysilyl group may be used alone or in a combination of two or more.

As the step of charging the hydrazide compound having the polar group are mentioned, for example, a step of charging a solution of the hydrazide compound having the polar group into the dry solid natural rubber raw material by means of a mixer, an extruder or a kneader. It is preferable to mix the materials using a kneader from a viewpoint of improving the dispersibility. Furthermore, a strainer treatment may further be carried out after mixing. This provides a modified natural rubber which has a high molecular weight and is free of contaminants. The "strainer treatment" used here means treatment for removing contaminants contained in the modified natural rubber by means of a meshy member.

In the step of charging the hydrazide compound having the polar group, the hydrazide compound having the polar group may be charged as it is, or in the form of a solution or emulsion solution of the hydrazide compound having the polar group diluted with a solvent. From a viewpoint of improving the dispersibility into the natural rubber, it is preferable to charge the hydrazide compound in form of the solution or emulsion solution.

The solution of the hydrazide compound having the polar group is formed by diluting the hydrazide compound with a solvent, and a suitable kind of the solvent is set up according to the species of the hydrazide compound. Water (refined water, ion-exchanged water, purified water and the like) can be used as the solvent. Moreover, the emulsion of the hydrazide compound having the polar group can be obtained by a conventional method using an emulsifier and, if necessary, an affinity improving agent. The aqueous solution has preferably a concentration of 20-80% by mass of the hydrazide compound having the polar group, and the emulsion has preferably a concentration of 3-50% by mass of the hydrazide compound having the polar group. When the above concentration of the hydrazide compound having the polar group in the solution or the emulsion is low (if the above concentration of the aqueous solution is less than 20% by mass or if the above concentration of the emulsion is less than 3% by mass), an amount of the aqueous solution or the emulsion required for adding a desired amount of the hydrazide compound having the polar group grows large. On the other hand, when the concentration of the hydrazide compound having the polar group is high (if the above concentration of the aqueous solution exceeds 80% by mass or if the above concentration of the emulsion exceeds 50% by mass), caused in a certain case are the problems that stability of the solution is damaged and the hydrazide compound having the polar group is reduced in dispersibility.

The amount of the aqueous solution of the hydrazide compound having the polar group added is preferably within a range of 0.05-30% by mass, and more preferably 1-10% by mass based on the total amount of the natural rubber, and the amount of the emulsion of the hydrazide compound having the polar group added is preferably within a range of 0.05-30% by mass, and more preferably 1-10% by mass based on the total amount of the natural rubber. Moreover, the amount of the hydrazide compound having the polar group added is preferably within a range of 0.01-8.0 parts by mass based on 100 parts by mass of the solid rubber component in the natural rubber raw material. Furthermore, when the modified natural rubber is compounded with a filler such as carbon black or silica, in consideration of the object of improving the low loss factor and wear resistance without diminishing the processability, it is important that a small amount of the polar group is introduced uniformly in each of the natural rubber molecules, therefore, the amount of the hydrazide compound having the polar group added in the modified natural rubber is preferably within a range of 0.01-5.0% by mass, and more preferably 0.01-2.0% by mass based on the solid rubber component in the natural rubber raw material.

The rubber composition according to the invention is characterized by using the modified natural rubber, and preferable to further contain a filler. The amount of the filler compounded is not particularly limited, but is preferably within a range of 5-100 parts by mass, and more preferably 10-70 parts by mass based on 100 parts by mass of the modified natural rubber. When the amount of the filler compounded is less than 5 parts by mass, the sufficient reinforcing property may not be obtained, while when it exceeds 100 parts by mass, the processability may be deteriorated.

As the filler used in the rubber composition according to the invention are mentioned carbon black and inorganic fillers. Moreover, as the inorganic fillers are mentioned silica and inorganic compounds represented by the following formula (I): 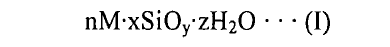 [wherein M is at least one selected from the group consisting of a metal of aluminum, magnesium, titanium, calcium or zirconium, oxides or hydroxides of these metals, their hydrates, or carbonates of these metals, n is an integer of 1-5, x is an integer of 0-10, y is an integer of 2-5, and z is an integer of 0-10]. These fillers may be used alone, or in a combination of two or more.

As the carbon black are mentioned GPF, FEF, SRF, HAF, ISAF and SAF grade carbon blacks and so on. As the silica are mentioned precipitated silica, fumed silica, colloidal silica and so on. As the inorganic compound of the formula (I) are mentioned alumina (Al₂O₃) such as γ-alumina, α-alumina or the like; alumina monohydrate (Al₂O₃·H₂O) such as boehmite, diaspore or the like; aluminum hydroxide [Al(OH)₃] such as gibbsite, bayerite or the like; aluminum carbonate [Al₂(CO₃)₃], magnesium hydroxide [Mg(OH)₂], magnesium oxide (MgO), magnesium carbonate (MgC0₃), talc (3MgO·4SiO₂·H₂O), attapulgite (5MgO·8SiO₂·9H₂O), titanium white (TiO₂), titanium black (TiO₂ₙ₋₁), calcium oxide (CaO), calcium hydroxide [Ca(OH)₂], aluminum magnesium oxide (MgO·Al₂O₃), clay (Al₂O₃·2SiO₂), kaolin (Al₂O₃·2SiO₂·2H₂O), pyrophyllite (Al₂O₃·4SiO₂·H₂O), bentonite (Al₂O₃·4SiO₂·2H₂O), aluminum silicate (Al₂SiO₅, Al₄·3SiO₄·5H₂O, and so on), magnesium silicate (Mg₂SiO₄, MgSiO₃, and so on), calcium silicate (Ca₂SiO₄, and so on), aluminum calcium silicate (A1₂O₃·CaO·2SiO₂, and so on), magnesium calcium silicate (CaMgSiO₄), calcium carbonate (CaCO₃), zirconium oxide (ZrO₂), zirconium hydroxide [ZrO(OH)_{2·}nH₂O], zirconium carbonate [Zr(CO₃)₂], and crystalline aluminosilicates containing charge-compensating hydrogen, alkali metal or alkaline earth metal such as various zeolites.

The rubber composition of the invention may be properly compounded with additives usually used in the rubber industry such as an antioxidant, a softener, a silane coupling agent, stearic acid, zinc white, a vulcanization accelerator, a vulcanizing agent and the like within a scope of not damaging the object of the invention in addition to the modified natural rubber and the filler. As these additives can be preferably used commercially available ones. The rubber composition of the invention can be produced by compounding the modified natural rubber with the various additives properly selected if necessary and milling, warming, extruding and so on.

The tire according to the invention is characterized by using the rubber composition, and preferably using the rubber composition in a tread. The tire using the rubber composition in the tread is excellent in the low fuel consumption, fracture characteristics and wear resistance. The tire according to the invention is not particularly limited as long as it uses the above-mentioned rubber composition in any tire member, and can be produced by the usual method. As a gas filled into the tire can be used usual air or air having a regulated partial oxygen pressure but also inert gases such as nitrogen, argon, helium and so on.

The following examples are given in illustration of the invention and are not intended as limitations thereof.

### EXAMPLES

### <Production Example 1>

A field latex is coagulated by adding formic acid to adjust pH to 4.7. The thus obtained solid is treated with a clapper 5 times, crumbed through a shredder. The dry rubber content of the thus obtained coagulated latex is measured, and then 600 g of the coagulated latex in terms of the dry rubber content and the emulsion solution of 3.0 g of isonicotinohydrazide are kneaded at room temperature and 30 rpm for two minutes in a kneader (prebreaker), and dispersed uniformly to obtain a dried modified natural rubber A. Furthermore, the resulting modified natural rubber A is subjected to extraction with petroleum ether and further extraction with the mixed solution of acetone and methanol in the ratio of 2:1 to separate unreacted hydrazide compound. From the analysis of the extract, no unreacted hydrazide compound is detected, and therefore the amount of isonicotinohydrazide added in the modified natural rubber A is 0.5% by mass based on the solid rubber component in the natural rubber raw material.

### <Production Examples 2-7>

Modified natural rubbers B-G are obtained in the same manner as in Production Example 1 except that 3.0 g of 3-(dimethylamino)propanehydrazide in Production Example 2, 3.9 g of 4-(dimethylamino)benzohydrazide in Production Example 3, 3.3 g of 4-hydroxybenzohydrazide in Production Example 4, 3.9 g of 4-benzoic acid hydrazide in Production Example 5, 8.5 g of 4-(tributyltin)butanehydrazide in Production Example 6 and 5.6 g of 4-(trimethoxysilyl)benzohydrazide in Production Example 7 are added respectively instead of 3.0 g of isonicotinohydrazide. Also, the amounts of the hydrazide compound having the polar group added in the modified natural rubbers B-G are analyzed in the same manner as in the modified natural rubber A to obtain the results shown in Table 1.

### <Production example 8>

A natural rubber H is obtained in the same manner as in Production Example 1 except that isonicotinohydrazide is not added.

### <Production Examples 9-16>

Modified natural rubbers I-O and Natural rubber P are obtained in the same manner as in Production Examples I-8 except that a cup lump (obtained by naturally coagulating latex obtained from a natural rubber tree) is used in Production Examples 9-16 instead of the coagulated latex obtained by adding formic acid to the field latex in Production Examples 1-8, respectively. Also, the amounts of the hydrazide compound having the polar group added in the modified natural rubbers I-O are analyzed in the same manner as in the modified natural rubber A to obtain the results shown in Table 1.

**Table 1**

| | Product | Natural rubber raw material | Hydrazide compound having polar group | | |
|---|---|---|---|---|---|
| | | | Kind | Amount charged (g) | Amount added (mass%) |
| Production Example 1 | Modified natural rubber A | Acid-coagulated latex | Isonicotinohydrazide | 3.0 | 0.50 |
| Production Example 2 | Modified natural rubber B | Acid-coagulated latex | 3-(dimethylamino)propanehydiazide | 3.0 | 0.50 |
| Production Example 3 | Modified natural rubber C | Acid-coagulated latex | 4-(dimethylamino)benzohydrazide | 3.9 | 0.65 |
| Production Example 4 | Modified natural rubber D | Acid-coagulated latex | 4-hydroxybenzohydrazide | 3.3 | 0.55 |
| Production Example 5 | Modified natural rubber E | Acid-coagulated latex | 4-benzoic acid hydrazide | 3.9 | 0.65 |
| Production Example 6 | Modified natural rubber F | Acid-coagulated latex | 4-(tributyltin)butanehydrazide | 8.5 | 1.41 |
| Production Example 7 | Modified natural rubber G | Acid-coagulated latex | 4-(trimethoxysilyl)benzohydrazide | 5.6 | 0.93 |
| Production Example 8 | Natural rubber H | Acid-coagulated latex | - | - | 0 |
| Production Example 9 | Modified natural rubber I | Cup lump | Isonicotinohydrazide | 3.0 | 0.48 |
| Production Example 10 | Modified natural rubber J | Cup lump | 3-(dimethylamino)propanehydrazide | 3.0 | 0.48 |
| Production Example 11 | Modified natural rubber K | Cup lump | 4-(dimethylamino)benzohydrazide | 3.9 | 0.62 |
| Production Example 12 | Modified natural rubber L | Cup lump | 4-hydroxybenzohydrazide | 3.3 | 0.52 |
| Production Example 13 | Modified natural rubber M | Cup lump | 4-benzoic acid hydrazide | 3.9 | 0.61 |
| Production Example 14 | Modified natural rubber N | Cup lump | 4-(tributyltin)butanehydrazide | 8.5 | 1.33 |
| Production Example 15 | Modified natural rubber O | Cup lump | 4-(trimethoxysilyl)benzohydrazide | 5.6 | 0.88 |
| Production Example 16 | Natural rubber P | Cup lump | - | - | 0 |

Then, a rubber composition having a compounding recipe as shown in Table 2 is prepared by milling in the plastmill, and the Mooney viscosity, tensile strength (Tb), tan δ and wear resistance are measured and evaluated by the following methods with respect to the rubber composition. The results of the rubber compositions according to a recipe 1 are shown in Table 3, and the results of the rubber compositions according to a recipe 2 are shown in Table 4.

### (1) Mooney viscosity

The Mooney viscosity ML₁₊₄ (130 °C) of the rubber composition is measured at 130°C according to JIS K6300-1:2001. The lower the Mooney viscosity, the better the processability.

### (2) Tensile strength

With respect to a vulcanized rubber obtained by vulcanizing the rubber composition at 145°C for 33 minutes, the tensile test is conducted according to JIS K6251-2004 to measure a tensile strength (Tb). The larger the tensile strength, the better the fracture resistance.

### (3) tan δ

With respect to a vulcanized rubber obtained by vulcanizing the rubber composition at 145°C for 33 minutes, a loss tangent (tan δ) is measured at a temperature of 50°C, a strain of 5% and a frequency of 15 Hz by using a viscoelasticity measuring device [manufactured by RHEOMETRICS Corporation]. The smaller the tan δ, the better the low loss factor.

### (4) Wear resistance

The wear resistance is evaluated by measuring a worn amount of a vulcanized rubber, which is obtained by vulcanizing the rubber composition at 145°C for 33 minutes, at a slip ratio of 60% and room temperature by means of a Lambourn abration tester, and shown by index on the basis that an inverse number of the worn amount of Comparative Example 1 is 100 in Examples 1-6 and Comparative Example 1, an inverse number of the worn amount of Comparative Example 2 is 100 in Examples 7-12 and Comparative Example 2, an inverse number of the worn amount of Comparative Example 3 is 100 in Examples 13-18 and Comparative Example 3, and an inverse number of the worn amount of Comparative Example 4 is 100 in Examples 19-24 and Comparative Example 4. The larger the index value, the less the worn amount and the better the wear resistance.

**Table 2**

| | Amount compounded (parts by mass) | |
|---|---|---|
| | Recipe 1 | Recipe 2 |
| Rubber component * 1 | 100 | 100 |
| Carbon black N339 | 50 | - |
| Silica *2 | - | 55 |
| Silane coupling agent *3 | - | 5.5 |
| Aromatic oil | 5 | 10 |
| Stearic acid | 2 | 2 |
| Antioxidant 6C *4 | 1 | 1 |
| Zinc white | 3 | 3 |
| Vulcanization accelerator DZ *5 | 0.8 | - |
| Vulcanization accelerator DPG *6 | - | 1 |
| Vulcanization accelerator DM *7 | - | 1 |
| Vulcanization accelerator NS *8 | - | 1 |
| Sulfur | 1 | 1.5 |

*1 Kinds of the rubber component used are shown in Tables 3 and 4.
*2 Brand name: Nipsil AQ manufactured by Tosoh Silica Corporation.
*3 Brand name: Si69 manufactured by Degussa Corporation, bis(3-triethoxysilylpropyl)tetrasulfide.
*4 N-(1,3-dimethylbutyl)-N'-phenyl-p-phenylenediamine.
*5 N,N'-dicyclohexyl-2-benzothiazolyl sulfenamide.
*6 Diphenyl guanidine.
*7 Dibenzothiazyl disulfide.
*8 N-t-butyl-2-benzothiazolyl sulfenamide.

**Table 3**

| | Example 1 | Example 2 | Example 3 | Example 4 | 5 | Example Example 6 | Comparative Example 1 |
|---|---|---|---|---|---|---|---|
| Compounding recipe | Recipe 1 | | | | | | |
| Rubber component | A | B | C | D | E | F | H |
| Mooney viscosity (ML1+4, 130°C) | 68 | 72 | 74 | 76 | 75 | 77 | 72 |
| Tb (MPa) | 27.3 | 26.8 | 27.2 | 26.5 | 26.2 | 27.5 | 25.1 |
| tan δ | 0.133 | 0.148 | 0.136 | 0.151 | 0.155 | 0.128 | 0.187 |
| Wear Resistance (index) | 127 | 115 | 122 | 112 | 115 | 124 | 100 |

**Table 4**

| | Example 7 | Example 8 | Example 9 | Example 10 | Example 11 | Example 12 | Comparative Example 2 |
|---|---|---|---|---|---|---|---|
| Compounding recipe | Recipe 1 | | | | | | |
| Rubber component | I | J | K | L | M | N | P |
| Mooney viscosity (ML1+4, 130°C) | 62 | 68 | 69 | 73 | 73 | 75 | 65 |
| Tb (MPa) | 26.7 | 26.3 | 26.5 | 26 | 25.5 | 26.5 | 24.5 |
| tan δ | 0.141 | 0.154 | 0.144 | 0.157 | 0.160 | 0.138 | 0.194 |
| Wear Resistance (index) | 124 | 112 | 121 | 115 | 110 | 121 | 100 |

**Table 5**

| | Example 13 | Example 14 | Example 15 | Example 16 | Example 17 | Example 18 | Comparative Example 3 |
|---|---|---|---|---|---|---|---|
| Compounding recipe | Recipe 2 | | | | | | |
| Rubber component | A | B | C | D | E | G | H |
| Mooney viscosity (ML1+4, 130°C) | 89 | 92 | 91 | 87 | 88 | 90 | 85 |
| Tb (MPa) | 25.5 | 25.4 | 25.2 | 25.2 | 25 | 26 | 23.4 |
| tan δ | 0.105 | 0.110 | 0.109 | 0.103 | 0.105 | 0.100 | 0.134 |
| Wear Resistance (index) | 122 | 120 | 118 | 118 | 120 | 122 | 100 |

**Table 6**

| | Example 19 | Example 20 | Example 21 | Example 22 | Example 23 | Example 24 | Comparative Example 4 |
|---|---|---|---|---|---|---|---|
| Compounding recipe | Recipe 2 | | | | | | |
| Rubber omponent | I | J | K | L | M | O | P |
| Mooney viscosity (ML1+4, 130°C) | 82 | 84 | 82 | 80 | 85 | 88 | 78 |
| Tb (MPa) | 25.2 | 24.5 | 24.6 | 24.7 | 25 | 25.2 | 22.8 |
| tan δ | 0.115 | 0.120 | 0.121 | 0.111 | 0.115 | 0.116 | 0.142 |
| Wear Resistance (index) | 121 | 118 | 120 | 119 | 122 | 120 | 100 |

As seen from the comparison of Examples with Comparative Example in each of the Tables 3-6, the fracture characteristics, low loss factor and wear resistance of the rubber composition can be highly improved by using the modified natural rubber modified with the hydrazide compound having the polar group instead of the natural rubber.

## Claims

1. A modified natural rubber formed by charging a hydrazide compound having a polar group into at least one natural rubber raw material selected from the group consisting of a natural rubber, a coagulated natural rubber latex and a natural rubber cup lump and adding the hydrazide compound having the polar group to a natural rubber molecule in the natural rubber raw material.

2. A modified natural rubber according to claim 1, wherein an amount of the hydrazide compound having the polar group added is 0.01-5.0% by mass based on a solid rubber component in the natural rubber raw material.

3. A modified natural rubber according to claim 1, wherein the polar group of the hydrazide compound having the polar group is at least one selected from the group consisting of amino group, imino group, nitrile group, ammonium group, imide group, amide group, hydrazo group, azo group, diazo group, hydroxyl group, carboxyl group, carbonyl group, epoxy group, oxycarbonyl group, nitrogen-containing heterocyclic group, oxygen-containing heterocyclic group, tin-containing group and alkoxysilyl group.

4. A method for producing a modified natural rubber, which comprises the step of charging a hydrazide compound having a polar group into at least one natural rubber raw material selected from the group consisting of a natural rubber, a coagulated natural rubber latex and a natural rubber cup lump and adding the hydrazide compound having the polar group to a natural rubber molecule in the natural rubber raw material.

5. A method according to claim 4, wherein the step of charging the hydrazide compound having the polar group is conducted by a mixer, an extruder or a kneader.

6. A rubber composition using a modified natural rubber as claimed in any one of claims 1-3.

7. A tire using a rubber composition as claimed in claim 6 in any tire member.
